(19) Europäisches Patentamt / European Patent Office / Office européen des brevets

(11) **EP 4 299 324 A1**

(12) **EUROPEAN PATENT APPLICATION**
published in accordance with Art. 153(4) EPC

(43) Date of publication:
**03.01.2024 Bulletin 2024/01**

(21) Application number: **21928049.2**

(22) Date of filing: **18.11.2021**

(51) International Patent Classification (IPC):
**B41J 2/21** *(2006.01)*     **C09D 11/326** *(2014.01)*
**B41M 5/00** *(2006.01)*

(52) Cooperative Patent Classification (CPC):
**B41J 2/21; B41M 5/00; C09D 11/322; C09D 11/326**

(86) International application number:
**PCT/JP2021/042443**

(87) International publication number:
**WO 2022/180955 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2021   JP 2021028996**

(71) Applicant: **Sakata INX Corporation
Osaka-shi, Osaka 550-0002 (JP)**

(72) Inventors:
• **MAEDA, Hirohito
Osaka-shi, Osaka 550-0002 (JP)**

• **MORIYASU, Kazuki
Osaka-shi, Osaka 550-0002 (JP)**
• **UEDA, Eri
Osaka-shi, Osaka 550-0002 (JP)**
• **SANO, Takaaki
Osaka-shi, Osaka 550-0002 (JP)**
• **CHAU, Choiwing
Osaka-shi, Osaka 550-0002 (JP)**

(74) Representative: **Grünecker Patent- und
Rechtsanwälte
PartG mbB
Leopoldstraße 4
80802 München (DE)**

(54) **WHITE INK COMPOSITION**

(57)     An object is to obtain a white ink which is easy to redisperse and is redispersible by being shaken several tens of times with weak force at most, or alternatively, without being shaken. As a solution, a white ink composition is provided which contains 5.0 to 20.0% by mass of a titanium oxide in an ink composition; 3.0 to 60.0 parts by mass of a solid content of alkali-soluble resin relative to 100 parts by mass of a pigment or pigments in the ink composition, wherein building blocks of the alkali-soluble resin are styrene; stearyl acrylate and/or lauryl acrylate; and acrylic acid, and the alkali-soluble resin has a weight-average molecular weight of 10,000 or more, an acid value of 100 mgKOH/g or more, and a glass transition temperature of 50°C or more; and a surfactant.

EP 4 299 324 A1

## Description

### Technical Field

The present invention relates to a white ink composition.

### Background Art

It has been well known that a styrene acrylic-based resin and various kinds of dispersants are blended into a white ink composition as described in Patent Literatures 1 and 2. However, properties of a precipitate particularly when a titanium oxide pigment precipitates have not yet been examined.

### Background Art Literature

### Patent Literature

Patent Literature 1: Japanese Patent Laid-open No. 2021-4368
Patent Literature 2: Japanese Patent Laid-open No. 2022-84072

### Summary of the Invention

### Problems to Be Solved by the Invention

In general, ink compositions tend to cause sedimentation and cause precipitation with the passage of time particularly in cases where the compositions contain titanium oxide. Additionally, it is difficult to easily redisperse even by shaking the sedimented ink composition, and it is difficult to redisperse unless shaken hundreds of times with strong force.

Therefore, there has been a desire to obtain a white ink which is easy to redisperse and is redispersible by being shaken several tens of times with weak force at most, or alternatively, without being shaken.

### Means for Solving the Problems

After studying in earnest to achieve the aforementioned object, the inventors of the present invention found that the aforementioned object could be achieved by being made into a specific composition, and eventually completed the present invention.

To be specific, the present invention encompasses the following:

1. A white ink composition containing:

5.0 to 20.0% by mass of a titanium oxide pigment in an ink composition;
3.0 to 60.0 parts by mass of a solid content of an alkali-soluble resin relative to 100 parts by mass of a pigment or pigments in the ink composition, wherein building blocks of the alkali-soluble resin are styrene; stearyl acrylate and/or lauryl acrylate; and acrylic acid, and the alkali-soluble resin has a weight-average molecular weight of 10,000 or more, an acid value of 100 mgKOH/g or more, and a glass transition temperature of 50°C or more; and a surfactant.

2. The white ink composition according to 1, wherein the solid content of the alkali-soluble resin is 10.0 to 30.0 parts by mass relative to 100 parts by mass of the pigment in the ink composition.

### Effects of the Invention

The present invention has an effect that the pigment once precipitated is easily redispersible in the white ink composition containing titanium oxide as a coloring pigment.

**Mode for Carrying Out the Invention**

The white ink composition of the present invention is preferably an aqueous white ink composition, which is described in order below.

First, a glass transition temperature and a weight-average molecular weight in the present invention are defined as follows.

<Glass Transition Temperature>

In the present invention, the glass transition temperature of a resin when the resin is an acrylic-based copolymer resin, is a theoretical glass transition temperature obtained by Wood's equation below.

$$\text{Wood's equation: } 1/Tg = W1/Tg1 + W2/Tg2 + W3/Tg3 + \cdots\cdots + Wx/Tgx$$

[In the equation, Tg1 to Tgx represent the glass transition temperatures of homopolymers comprising the resin's constituent monomers 1, 2, 3 ⋯ x , respectively, W1 to Wx represent the polymerization ratios of monomers 1, 2, 3 ⋯ x, respectively, and Tg represents the theoretical glass transition temperature. It should be noted that, in Wood's equation, glass transition temperatures are absolute temperatures.]

The glass transition temperature of a resin, when the resin is other than an acrylic-based copolymer resin, is a theoretical glass transition temperature obtained by a thermal analysis. The thermal analysis method conforms to JIS K7121 (a method of measuring a transition temperature of plastics) and, as an example, the glass transition temperature can be measured using the Pyris 1 DSC manufactured by PerkinElmer, Inc., under the conditions of 20°C/min in rate of temperature rise and 20 mL/min in flow rate of nitrogen gas.

<Weight-Average Molecular Weight>

The weight-average molecular weight of the resin in the present invention is measurable with the Gel Permeation Chromatography (GPC) method. As an example, by using Water2690 (Waters Corporation) as a GPC system; PLgel, 5 μ, MIXED-D (Polymer Laboratories Inc.) as a column; and tetrahydrofuran as a developing solvent, chromatography is carried out under conditions at a column temperature of 25°C, a flow rate of 1 mL/min, and a sample injection concentration of 10 mg/mL and an injection volume of 100 μL at an RI detector, to obtain a polystyrene equivalent weight-average molecular weight as the weight-average molecular weight.

<Titanium Oxide Pigment>

In the present invention, 5.0 to 20.0% by mass of a titanium oxide pigment is contained in an ink composition.
Alternatively, the titanium oxide pigment is preferably 50.0% by mass or more, more preferably 55.0% by mass or more, and even more preferably 60.0% by mass or more in a solid content of the white ink composition of the present invention (a sum of the pigment and a resin content). It is also preferably 98.0% by mass or less, more preferably 90.0% by mass or less, and even more preferably 80.0% by mass or less.
As a titanium oxide pigment usable in the present invention, those known can be used. Titanium oxide not subjected to a surface treatment may be used, and a titanium oxide pigment whose surface is treated with one or more kinds selected from silica, alumina, zirconia, an organic silicon compound, etc. may be used. An average particle size of the titanium oxide pigment is preferably 0.15 to 0.30 μm. It should be noted that a titanium oxide pigment treated with silica, alumina, and an organic compound is preferred.
Examples of surface-treated titanium oxide may include R-960 (silica-coated titanium oxide pigment) (DuPont de Nemours, Inc.), CR-50, R-630, and R-680 (alumina-coated titanium oxide pigments), R-780, R-850, and R-550 (alumina and silica-coated titanium oxide pigments), CR-50-2, PF-736, and R-980 (alumina and organic matter-coated titanium oxide pigments), CR-57 and CR-Super70 (alumina, zirconia and organic material-coated titanium oxide pigments).

<Titanium Oxide Pigment Treated with Silica, Alumina, and Organic Compound>

As a titanium oxide pigment treated with silica, alumina, and an organic compound, which is usable in the present invention, those known can be used. Alternatively, it need not be used. In particular, the amount of silica, aluminum, and organic matter in the pigment is preferably such that an amount of titanium oxide in the titanium oxide pigment is in a range of 90.0 to 98.0% by mass. An average particle size of this titanium oxide pigment is preferably 0.15 to 0.30 μm.

As a titanium oxide pigment, it is possible to use PF-690, PF-691, PF-711, PC-3, CR-80, CR-90, CR-90-2, CR-93 (ISHIHARA SANGYO KAISHA, LTD.), etc.

The average particle size is a value measured with the Coulter counter method.

<Alkali-Soluble Resin>

As an alkali-soluble resin in the present invention, a resin which has styrene, stearyl acrylate and/or lauryl acrylate, and acrylic acid as building blocks, can be employed as a specific alkali-soluble resin.

Such specific alkali-soluble resin has a weight-average molecular weight of 10,000 or more. Further, it is preferably 13,000 or more, preferably 50,000 or less, more preferably 40,000 or less, and even more preferably 30,000 or less.

A solid content of the alkali-soluble resin can be set to 3.0 to 60.0% by mass relative to a mass of a pigment in the white ink composition, while it is more preferably 4.0% by mass or more, even more preferably 10.0% by mass or more, more preferably 45.0% by mass or less, and even more preferably 30.0% by mass or less.

If the aforesaid specific alkali-soluble resin is used, a water-dispersible resin and other alkali-soluble resin may be used in combination.

The alkali-soluble resin is such that the ratio, by mass of constituent monomers, of preferably (styrene)/(stearyl acrylate and/or lauryl acrylate)/(acrylic acid) is (20 to 80)/(5 to 25)/(15 to 30).

In the alkali-soluble resin, from the viewpoint of reducing cohesion of a pigment by suitably crosslinking the aforesaid resin, a bifunctional or higher crosslinking agent may be used.

The bi- or higher functional crosslinking agent may be one which has two or more reactive functional groups in a molecule in order to react with the functional groups in an alkali crosslinking resin. Examples of the reactive functional group may include epoxy group, hydroxyl group, isocyanate group, amino group, and aziridine group. The bi- or higher functional crosslinking agents can be used singly or in combination of two or more thereof.

An acid value of the alkali-soluble resin is 100 mgKOH/g or more, while from the viewpoint of enhancing solubility in an aqueous media, it is preferably 125 mgKOH/g or more, and more preferably 150 mgKOH/g or more. Also, the acid value of the alkali-soluble resin is preferably 300 mgKOH/g or less, and more preferably 250 mgKOH/g or less, from the viewpoint of improving water resistance of a printed matter. It should be noted that the acid value is a theoretical acid value that is an arithmetically obtained mg number of potassium hydroxide theoretically required for neutralizing 1 g of an alkali-soluble resin on the basis of a composition of monomers used for synthesizing the alkali-soluble resin.

The glass transition temperature of the alkali-soluble resin is preferably 50°C or more, more preferably 60°C or more, and even more preferably 70°C or more. The glass transition temperature of the alkali-soluble resin is preferably 100°C or less, more preferably 90°C or less, and even more preferably 80°C or less, from the viewpoint of improving bending tolerance property of a printed matter.

<Water-Dispersible Resin>

A water-dispersible resin can be incorporated into the white ink composition of the present invention. As a water-dispersible resin, one or more types selected from styrene acrylic-based resin emulsions, polyurethane-based resin emulsions, and polyolefin-based resin emulsions may or may not be used in combination.

In the case of using other water-dispersible resins in combination, a ratio of a solid content of the water-dispersible resins in the white ink composition is preferably 10.0% by mass or less, and more preferably 8.0% by mass or less.

The styrene acrylic-based resin emulsion is an emulsion in which a styrene acrylic-based resin is dispersed in water, and is manufacturable by emulsion polymerization, dispersion polymerization, suspension polymerization, pulverization, or solution/bulk polymerization, followed by post-emulsification. Detailed information about this method and stabilizers are described in "Emulsion Polymerization and Emulsion Polymer" (P.A. Lovell, M.S. El-Aasser, John Wiley & Sons Ltd., England, 1977, incorporated in the present specification by reference).

Examples of commercial products of the styrene acrylic-based resin emulsion may include M6963 (an acid value of less than 10 mgKOH/g, Japan Coating Resin Co., Ltd.), J-450, J-734, J-7600, J-352, J-390, J-7100, J-741, J-74J, J-511, J-840, J-775, HRC-1645, HPD-71, PDX-6102B, JDX-5050 (styrene acrylic-based resin emulsions, BASF SE), UC-3900 (styrene acrylic-based resin emulsion, TOAGOSEI CO., LTD.) AP4710 (acryl-silicon-based resin emulsion, SHOWA HIGHPOLYMER CO., LTD.), SF460, SF460S, SF420SF110, SF300, and SF361 (polyurethane-based resin emulsion, Nippon Unicar Company Limited), W-6020, W-5025, W-5661, and W-6010 (polyurethane-based resin emulsion, Mitsui Chemicals, Inc.).

The polyurethane-based resin emulsion is an emulsion in which a polyurethane resin is dispersed in water, and any one of anionic, cationic, and nonionic ones may be used, but anionic and nonionic ones are preferable. Examples of polyurethane resins may include polyether-based polyurethane resins, polyester-based polyurethane resins, polyester/polyether-based polyurethane resins, and polycarbonate-based polyurethane resins. The polyurethane-based resin emulsions may be used singly or in combination of two or more thereof.

Examples of commercial products of the polyurethane-based resin emulsion may include "SUPERFLEX210" (DKS Co. Ltd., anionic polyester-based polyurethane resin), "SUPERFLEX130" (DKS Co. Ltd., anionic polyester-based polyurethane resin), "SUPERFLEX500M" (DKS Co. Ltd., nonionic polyester-based polyurethane resin), "SUPERFLEX460" (DKS Co. Ltd., anionic polycarbonate-based polyurethane resin), "Impranil DLP1380" (Sumika Covestro Urethane Co., Ltd., anionic polyester-based polyurethane resin), "Baybond PU407" (Sumika Covestro Urethane Co., Ltd., anionic/nonionic polyester-based polyurethane resin), and "SUPERFLEX420NS" (DKS Co. Ltd., anionic polycarbonate-based polyurethane resin).

The polyolefin-based resin emulsion is an emulsion in which a polyolefin-based resin is dispersed in water. Examples of polyolefin-based resins may include polyethylene resin, polypropylene resin, polybutylene resin, and polyolefin resin obtained by copolymerization of two or more types of ethylene, propylene, and butylene. Also, the polyolefin-based resin may be a modified polyolefin resin obtained by introducing an amino group, a carboxyl group, a hydroxyl group, an acryloyl group, and other polymer chain into a polyolefin chain; an oxidized polyolefin resin obtained by subjecting a part of a polyolefin chain to an oxidization treatment; and a halogenated polyolefin resin obtained by treating a part thereof with halogen. The polyolefin-based resin emulsions may be used singly or in combination of two or more thereof.

Examples of commercial products of the polyolefin-based resin emulsion may include "CHEMIPEARL S100" (Matsui Chemicals Inc., polyethylene-based resin emulsion), "CHEMIPEARL XEP800H" (Matsui Chemicals Inc., polypropylene-based resin emulsion), and "ARROWBASE TC-4010" (UNITIKA LTD., polypropylene-based resin emulsion).

Besides the styrene acrylic-based resin emulsion, the polyurethane-based resin emulsion, and the polyolefin-based resin emulsion, a known resin emulsion used for the white ink composition (other resin emulsions) can be incorporated into the resin emulsion of the present invention as long as the effects of the present invention are not impaired. Examples of other resin emulsions may include acrylic-based resin emulsions, polyvinyl acetate-based resin emulsions and polyvinyl chloride-based resin emulsions.

A solid content concentration of each of the styrene acrylic-based resin emulsion, the polyurethane-based resin emulsion, and/or the polyolefin-based resin emulsion in a total solid content of the water-dispersible resin is preferably 70.0% by mass or more, more preferably 80.0% by mass or more, even more preferably 90.0% by mass or more, and most preferably 95.0% by mass or more, from the viewpoint of improving coated film resistance, such as abrasion resistance.

<Other Water-Soluble Resins (Alkali-Soluble Resins)>

Examples of other water-soluble resins (alkali-soluble resins) may include acrylic-based copolymer resins, maleic acid-based copolymer resins, polyester resins obtainable by polycondensation reaction, and polyurethane resins. Materials for synthesizing such alkali-soluble resins are disclosed in, for example, Japanese Patent Laid-open No. 2000-94825, and it is possible to use acrylic-based copolymer resins, maleic acid-based copolymer resins, polyester-based resins, polyurethane-based resins, etc., each of which is obtainable using the materials described in this publication. Furthermore, resins obtained using materials other than the above can also be utilized. Any of the foregoing alkali-soluble resins may be used singly or in combination of two or more thereof.

It should be noted that, as a water-soluble resin, a water-soluble resin not being alkali-soluble is employable in some cases.

A content of other alkali-soluble resins may be 1.0 part by mass or more, and preferably 5.0 parts by mass or more relative to 100 parts by mass of the pigment from the viewpoint of enhancing dispersibility of the pigment. The content of other alkali-soluble resin is preferably 100 parts by mass or less, more preferably 80 parts by mass or less, even more preferably 60 parts by mass or less relative to 100 parts by mass of the pigment, from the viewpoint of lowering the viscosity of an aqueous inkjet composition.

As an acrylic-based copolymer resin, it is possible to use, for example, ones which are obtainable by polymerizing in a solvent a mixture of other monomers copolymerizable with an anionic group-containing monomer in the presence of a standard radical-generating agent (for example, benzoyl peroxide, tert-butyl peroxybenzoate, azobis(isobutyronitrile, etc.).

Examples of anionic group-containing monomers may include monomers having at least one type of anionic group selected from the group consisting of carboxyl group, sulfonic acid group, and phosphonic acid group. Of these, monomers having a carboxyl group are particularly preferable.

Examples of monomers having carboxyl group may include acrylic acid, methacrylic acid, crotonic acid, itaconic acid, maleic acid, fumaric acid, 2-carboxyethyl(meth)acrylate, 2-carboxypropyl(meth)acrylate, maleic anhydride, fumaric anhydride, maleic acid half ester. Also, examples of monomers having sulfonic acid group may include sulfoethyl methacrylate. In addition, examples of monomers having a phosphonic acid group may include phosphonoethyl methacrylate.

Other monomers copolymerizable with the anionic group-containing monomer preferably contain a hydrophobic group-containing monomer from the viewpoint of improving adsorptivity with the pigment.

As a hydrophobic group-containing monomer, examples of monomers having a long-chain alkyl group may include alkyl esters with 8 or more carbon atoms of radical polymerizable unsaturated carboxylic acid, such as (meth)acrylic acid (for example, 2-ethylhexyl(meth)acrylate, octyl(meth)acrylate, lauryl(meth)acrylate, stearyl(meth)acrylate, and 2-hydroxylstearyl(meth)acrylate), alkyl vinyl ethers with 8 or more carbon atoms (for example, dodecyl vinyl ether), vinyl esters of fatty acid with 8 or more carbon atoms (for example, vinyl 2-ethylhexanoate, vinyl laurate, and vinyl stearate); and examples of monomers having an alicyclic hydrocarbon group may include cyclohexyl(meth)acrylate; examples of monomers having an aromatic hydrocarbon group may include styrene-based monomers, such as benzyl(meth)acrylate, styrene, $\alpha$-methylstyrene, and vinyltoluene. The hydrophobic group-containing monomers may be used singly or in combination of two or more thereof.

As other monomers polymerizable with the anionic group-containing monomer, it is possible to contain a hydrophilic group-containing monomer from the viewpoint of suppressing cohesion of the alkali-soluble resin in an aqueous solvent.

As a hydrophilic group-containing monomer, examples of monomers having a (poly) oxyalkylene chain may include an esterified product of one end alkyl-capped (poly) alkylene glycol, such as methoxypolyethylene glycol, methoxypolyethylene polypropylene glycol, ethoxypolyethylene glycol, ethoxypolyethylene polypropylene glycol, propoxy polyethlene glycol, and propoxy polyethlene polypropylene glycol, and a radical polymerizable unsaturated carboxylic acid, such as (meth)acrylic acid, ethylene oxide adduct and/or propylene oxide adduct to a radical polymerizable unsaturated carboxylic acid, such as (meth)acrylic acid; examples of basic group-containing monomers may include vinylpyrrolidones, such as 1-vinyl-2-pyrrolidone, 1-vinyl-3-pyrrolidone, vinylpyridines, such as 2-vinylpyridine, 4-vinylpyridine, 5-methyl-2-vinylpyridine, and 5-ethyl-2-vinylpyridine, vinyl imidazoles, such as 1-vinylimidazole and 1-vinyl-2-methylimidazole, vinylpiperidine, such as 3-vinylpiperidine and N-methyl-3-vinylpiperidine, nitrogen-containing derivatives of (meth)acrylic acid, such as dimethylaminoethyl-(meth)acrylate, diethylaminoethyl(meth)acrylate, tert-butylaminoethyl (meth)acrylate, (meth)acrylamino, N-methirole(meth)acrylamide, N-butoxymethyl-(meth)acrylamide, N-methoxy(meth)acrylamide, N-ethoxy(meth)-acrylamide, N-dimethylacrylamide, and N-propylacrylamide; examples of monomers having a hydroxyl group may include hydroxyalkylesters of (meth)acrylic acid, such as hydroxyethyl(meth)acrylate and hydroxypropyl(meth)acrylate; and examples of monomers having an epoxy group may include glycidyl(meth)acrylate. The hydrophilic group-containing monomers may be used singly or in combination of two or more thereof.

Examples of copolymerizable monomers other than the aforesaid hydrophobic group-containing monomers and hydrophilic group-containing monomers may include alkylesters with fewer than 8 carbon atoms of (meth)acrylic acid, such as methyl (meth)acrylate, ethyl (meth)acrylate, propyl (meth)acrylate, isopropyl (meth)acrylate, butyl (meth)acrylate, and hexyl (meth)acrylate. Any of the foregoing copolymerizable monomers other than the foregoing hydrophobic group-containing monomers and hydrophilic group-containing monomers may be used singly or in combination of two or more thereof.

<Surfactant>

A surfactant in the present invention contains alkylsulfonate salt and/or polyoxyethylene alkyl ether sulfate.

The aforesaid alkylsulfonate salt is a higher alcohol sulfate salt, and is a compound represented by general formula (1): $R_1SO_3M$ (in general formula (1), $R_1$ is a straight-chain or branched alkyl group or alkenyl group with 6 or more but 18 or fewer carbon atoms, and M is cation.). In formula (1), examples of M may include alkaline metal ions, such as sodium and potassium, and ammonium ions. Examples of alkylsulfonate salt may include lauryl sulfate, LATEMUL PS (Kao Corporation), SUNNOL LM-1130 (Lion Corporation), and Sanded LNM (SANYOKASEI CO., LTD). The alkylsulfonate salts may be used singly or in combination of two or more thereof.

Polyoxyethylene alkyl ether sulfate is a compound represented by general formula (2): $R_2O(AO)mSO_3M$ (in formula (2), $R_2$ is a straight-chain or branched alkyl group or alkenyl group with 6 or more but 18 or fewer carbon atoms, AO is a straight-chain or branched oxyalkylene group with 2 or more but 4 or fewer carbon atoms, m is an average number of moles added of AO, and M is a cation.). Examples of polyoxyethylene alkyl ether sulfate may include Sanded EN (SANYOKASEI CO., LTD), SUNNOL LMT-1430 (Lion Corporation), and Adekahope YES-25 (ADEKA CORPORATION). Polyoxyethylene alkyl ether sulfates may be used singly or in combination of two or more thereof.

Known surfactants (other surfactants) used for a white ink composition, other than the aforesaid alkylsulfonate salt and/or polyoxyethylene alkyl ether sulfate, can be included in the surfactant in the present invention as long as the effects of the present invention are not impaired. Examples of the foregoing other surfactants may include nonionic surfactants, cationic surfactants, anionic surfactants, amphoteric surfactants, and betaine surfactants. Specific examples of the above-mentioned other surfactants may include silicone-based surfactants, fluorochemical-based surfactants, and acetylene-based surfactants. These other surfactants may be used singly or in combination of two or more thereof.

Examples of the silicone-based surfactants may include BYK-347, BYK-377, and BYK-3455 (BYK JAPAN KK.).

Examples of fluorochemical-based surfactants may include F-410, F-444 and F-553 (which are available from DIC Corporation), and FS-65, FS-34, FS-35, FS-31, and FS-30 (which are available from DuPont de Nemours, Inc.).

Examples of acetylene-based surfactants may include one type or two or more types selected from the following commercially available ones whose product names are Surfynol 104E, Surfynol 104H, Surfynol 104A, Surfynol 104BC, Surfynol 104DPM, Surfynol 104PA, Surfynol 104PG-50, Surfynol 420, Surfynol 440, Surfynol 465, Dynol 607, Dynol 609, OLFINE E1004, OLFINE E1010, OLFINE E1020, OLFINE PD-001, OLFINE PD-002W, OLFINE PD-004, OLFINE PD-005, OLFINE EXP.4001, OLFINE EXP.4200, OLFINE EXP.4123, and OLFINE EXP.4300 (Nissin Chemical Co, LTD.).

<Water-Soluble Solvent>

As a water-soluble solvent in the present invention, any known water-soluble solvent used for a white ink composition is usable without any special restriction, and examples thereof may include mono alcohols, polyhydric alcohols, lower alkyl ethers of polyhydric alcohol, nitrogen-containing compounds, ketones, ethers, and esters. Water-soluble solvents may be used singly or in combination of two or more thereof.

Examples of mono alcohols may include methanol, ethanol, 1-propanol, 1-butanol, and 3-methoxy-3-methyl-1-butanol.

Examples of polyhydric alcohols may include ethylene glycol, propylene glycol, glycerin, diethylene glycol, 1,3-butylene glycol, 1,4-buthylene glycol, 1,2-pentandiol, 1,5-pentandiol, neopentyl glycol, 1,2-hexanediol, 1,6-hexanediol, 1,2-cyclohexanediol, heptanediol, and 1,8-octanediol.

Examples of lower alkyl ethers of the polyhydric alcohol may include ethylene glycol monomethyl ether, ethylene glycol dimethyl ether, ethylene glycol monoethyl ether, ethylene glycol diethyl ether, ethylene glycol monopropyl ether, ethylene glycol isopropyl ether, ethylene glycol monobutyl ether, ethylene glycol isobutyl ether, propylene glycol monomethyl ether, propylene glycol monoethyl ether, propylene glycol monopropyl ether, propylene glycol monobutyl ether, diethylene glycol monomethyl ether, diethylene glycol monoethyl ether, dipropylene glycol mono-n-propyl ether, and dipropylene glycol mono-n-butyl ether.

Examples of nitrogen-containing compounds may include pyrrolidone and N-methyl-2-pyrrolidone.

Examples of ketones may include acetone, methyl ethyl ketone, methyl butyl ketone, methyl isobutyl ketone, diisopropyl ketone, cyclopentanone, and cyclohexanone.

Examples of ethers may include isopropyl ether, n-butyl ether, tetrahydrofuran, tetrahydropyran, and 1,4-dioxane.

Examples of esters may include propylene carbonate, methyl acetate, ethyl acetate, propyl acetate, isopropyl acetate, butyl acetate, isobutyl acetate, amyl acetate, ethyl lactate, ethyl butyrate, dibutyl phthalate, dioctyl phthalate; and cyclic esters, such as ε-caprolactone and ε-caprolactam.

From the viewpoint of suppressing drying of an ink composition in an inkjet nozzle and easy formation of an ink layer (film) on a base material, the water-soluble solvent preferably includes at least one type selected from the group consisting of mono alcohols, polyhydric alcohols, lower alkyl ethers of polyhydric alcohol, and nitrogen-containing compounds, and more preferably includes at least one type selected from the group consisting of propylene glycol, glycerin, diethylene glycol, ethylene glycol monobutyl ether, diethylene glycol monobutyl ether, and 3-methoxy-3-methyl-1-butanol.

<Water>

Water in the present invention includes water as aqueous media included in a pigment-dispersed liquid described later, water included in the resin emulsion, and water added for controlling a concentration of the white ink composition of the present invention. Examples of water may include ion exchange water, pure water, distilled water, and industrial water. The waters may be used singly or in combination of two or more thereof.

A ratio of the water (including water included in individual components) in the white ink composition is preferably 40.0% by mass or more, and more preferably 50.0% by mass or more, from the viewpoint of improving coated film drying properties. The ratio is preferably 70.0% by mass or less, and more preferably 60.0% by mass or less, from the viewpoint of improving discharge stability.

<Basic Compound>

The white ink composition of the present invention preferably includes a basic compound from the viewpoint of dissolving an alkali-soluble resin. Examples of the basic compound may include inorganic basic compounds, such as sodium hydroxide and potassium hydroxide; and organic basic compounds, such as ammonia, methyl amine, ethylamine, monoethanolamine, N,N-dimethylethanolamine, N,N-diethylethanolamine, N,N-dibutylethanolamine, diethanolamine, N-methyldiethanolamine, triethanolamine, morpholine, N-methylmorpholine, and N-ethylmorpholine. The basic compounds may be used singly or in combination of two or more thereof.

A ratio of the basic compound in the white ink composition of the present invention may be a quantity sufficient to dissolve the alkali-soluble resin in a medium. In general, the ratio is preferably 0.05% by mass or more, and more preferably 0.1% by mass or more, from the viewpoint of enhancing dispersion stability of the alkali-soluble resin, and the ratio is preferably 1.0% by mass or less, and more preferably 0.5% by mass or less, from the viewpoint of enhancing water resistance of a printed matter.

Furthermore, additives, such as known resins, pigment dispersants, antifungal agents, rustproofing agents, thickening agents, antioxidants, UV absorbents, storability-improving agents, defoaming agents, and pH-adjusting agents, can be added to the white ink composition of the present invention depending on the purpose. However, resin particles may or may not be blended in order to prevent precipitation of a pigment in the white ink composition.

<Method for Preparing White Ink Composition>

A method for preparing (manufacturing) the white ink composition of the present invention is not particularly limited, and it is possible to employ a method including adding the above components sequentially or concurrently, followed by mixing together.

Among them, there is, for example, (1) a method for preparing the white ink composition including: mixing an aqueous resin varnish in which the alkali-soluble resin is dissolved in water in the presence of the basic compound, a pigment, and a pigment dispersant, etc. as needed; and preparing a pigment-dispersed liquid (ink base) by using various types of dispersion machines, such as a ball mill, an attritor, a roll mill, a sand mill, and an agitator mill, followed by adding the rest of materials.

There is also (2) a method for preparing the white ink composition including: dispersing a pigment with the above method; obtaining a resin-coated pigment in which an alkali-soluble resin is deposited on a surface of the pigment by, for example, acid precipitation method and an ion exchange means described in Domestic Re-publication of International Patent Laid-open No. WO2005/116147; neutralizing the obtained resin-coated pigment with a basic compound, and then redispersing the pigment in water by using various dispersion machines (a high-speed agitator, etc.), followed by adding the rest of materials.

The white ink composition of the present invention has an initial viscosity after manufacturing in a range of 2.0 to 15.0 mPa·s, and preferably 3.0 to 12.0 mPa·s. The viscosity is measurable by, for example, an E-type viscometer (product name "RE100L-type viscometer," Toki Sangyo Co., Ltd.).

<Primer Composition>

When printing with the white ink composition of the present invention, a print layer or a coating layer composed of a primer composition can be previously disposed on a surface of a substrate. The primer composition can contain a cohesion promoter to promote cohesion of the white ink composition. As the primer composition, it is possible to apply, for example, a colorless ink composition described in Japanese Patent Laid-open No. 2009-190379, a primer ink composition described in Japanese Patent No. 6424266, and a primer ink described in Japanese Patent Laid-open No. 2017-88646.

Examples of cohesion promoters may include water-soluble multivalent metal salts, organic acids, and cationic polymers. Cohesion promoters may be used singly or in combination of two or more thereof.

Examples of water-soluble multivalent metal salts may include dissociative salts of alkaline earth metals, such as Ca and Mg. Specific examples of water-soluble multivalent metal salts may include calcium nitrate, $CaCl_2$, $Ca(OH)_2$, $(CH_3COO)_2Ca$, $MgCl_2$, $Mg(OH)_2$, $(CH_3COO)_2Mg$, $(HCOO)_2Ca$, and $MgSO_4$. Of these, calcium salt is preferable, and calcium nitrate, $CaCl_2$, $Ca(OH)_2$, and $(CH_3COO)_2Ca$, $(HCOO)_2Ca$ are preferable.

Examples of organic acids may include lactic acid, malic acid, citric acid, oxalic acid, malonic acid, acetic acid, propionic acid, and fumaric acid.

Examples of cationic polymers may include polymers having primary to tertiary amino groups, and polymers having a quaternary ammonium salt group. Specific examples of cationic polymers may include primary to tertiary amino groups and salts thereof, a homopolymer of a monomer (cationic monomer) having a quaternary ammonium salt group, and a copolymer or condensation polymer of the cationic monomer and other monomer (hereinafter referred to as "noncationic polymer"). cationic polymers are usable in the form of either water-soluble polymers or water-dispersible latex particles.

In general, a content of the cohesion promoter is preferably 1.0% by mass or more in the primer composition, from the viewpoint of improving clarity and bleed resistance of a printed matter, and the content is preferably 15.0% by mass or less, and more preferably 10.0% by mass or less in the primer composition, from the viewpoint of improving water resistance of the printed matter.

A primer composition can include a resin emulsion from the viewpoint of improving wear resistance and adhesion of a primer. Resin emulsions preferably have good stability even in the presence of a cohesion promoter, and are usable either singly or in combination of two or more thereof.

Examples of resin emulsions may include acrylic-based resin emulsions, polyester-based resin emulsions, polyurethane-based resin emulsions, polyvinyl acetate-based resin emulsions, polyvinyl chloride-based resin emulsions, polybutadiene-based resin emulsions, and polyolefin-based resin emulsions. Of these, acrylic-based resin emulsions, polyvinyl acetate-based resin emulsions, and polyolefin-based resin emulsions are preferable.

Examples of acrylic-based resin emulsions may include acrylic resin emulsions, styrene-acrylic-based resin emulsions, acrylic-vinyl acetate-based resin emulsions, acrylic-vinyl chloride-based resin emulsions, acrylic-silicone-based resin emulsions, and acrylic-colloidal silica-based resin emulsions. Of these, styrene-acrylic-based resin emulsions are preferable. A resin included in the acrylic-based resin emulsion preferably has a glass transition temperature of 0°C or less.

A resin included in the polyvinyl acetate-based resin emulsion preferably has a glass transition temperature of 0°C or more but 50°C or less because the polyvinyl acetate-based resin emulsion has good adhesion with a recording medium.

A chlorinated polyolefin-based resin emulsion obtained by chlorinating and emulsifying a polyolefin-based resin is preferable as the polyolefin-based resin emulsion. Examples of chlorinated polyolefin-based resin emulsions may include chlorinated polypropylene resin emulsions and chlorinated polyethylene resin emulsions, whose degree of chlorination is preferably 5 to 30%.

In general, a resin solid content of the resin emulsion is preferably 0.5% by mass or more, and more preferably 1.0% by mass or more in a primer composition from the viewpoint of improving adhesion to a base material. And the resin solid content is preferably 10.0% by mass or less, and more preferably 5.0% by mass or less in the primer composition from the viewpoint of improving storage stability.

The primer composition can include a hydrazide compound because adhesion between the primer and a base material of a substrate can be improved through interaction with a surface of the base material of the substrate. The hydrazide compound is preferably a dihydrazide compound, and examples thereof may include oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide, and itaconic acid dihydrazide.

In general, the content of the hydrazide compound is approximately 0.2% by mass or more but 5% by mass or less in a primer composition.

The primer composition can include a surfactant from the viewpoint of improving leveling properties on a base material. The same surfactants as the aforementioned surfactants that can be mixed into the white ink composition are mixable as the surfactant.

Besides the above components, an arbitrary component may be mixed as needed into the primer composition. Examples of arbitrary components may include water-soluble organic solvents and various kinds of additives. Examples of additives may include a storability-improving agent and a defoaming agent.

Examples of water-soluble organic solvents may include mono alcohols, polyhydric alcohols, lower alkyl ethers of polyhydric alcohol, ketones, ethers, esters, and nitrogen-containing compounds. It should be noted that it is better not to use a water-soluble organic solvent from the viewpoint of drying properties of a primer layer obtained.

Examples of storability-improving agents may include hindered amines, UV absorbents, and antioxidants. Examples of hindered amines may include N-CH3 type, N-H type, and N-OR type. Examples of UV absorbents may include benzophenone-based UV absorbents, benzotriazole-based UV absorbents, salicylate-based UV absorbents, hydroxyphenyl-triazine-based UV absorbents, cyanoacrylate-based UV absorbents, and nickel complex salt-based UV absorbents. Examples of antioxidants may include phenol-based antioxidants, amine-based antioxidants, sulfur-based antioxidants, and phosphorus-based antioxidants.

Examples of defoaming agents may include silicone-based defoaming agents and Pluronic (registered trademark) defoaming agents.

<Manufacturing of Primer Composition>

The primer composition is manufacturable by adding the cohesion promoter and, on an as-needed basis, the resin emulsion, the hydrazide compound, the surfactant, the water-soluble organic solvent, and various types of additives to water, and by stirring and mixing together by a Disper mixer.

<Printed Matter>

A printed matter is obtained by printing with the white ink composition and, as needed, an ink set including the primer composition. Specifically, it is possible to obtain with an image formation method in which a primer layer is formed by applying the primer composition to a base material, followed by drying, and then the white ink composition is printed on the primer layer by using an inkjet printer. Examples of a coating method for the primer composition may include coating methods using various kinds of coating devices, such as a blade coater, air knife coater, roll coater, bar coater, gravure coater, rod blade coater, lip coater, curtain coater, die coater, and inkjet.

Conventionally known conditions are suitably applicable to printing methods with inkjets. For example, there is an inkjet printing method in which the primer composition (or the aforementioned and white ink composition) is accommodated in an ink cartridge, and the ink cartridge is attached to an inkjet recording device of single pass method, etc. so as to be ejected from a nozzle to a base material (or a primer layer).

Examples of the base material may include non-absorbable printing media, such as art paper, inkjet paper, coated paper e.g., inkjet glossy paper, polyolefin film, polyester film, nylon film, plastic-based base materials e.g., polyvinyl chloride sheets; uncoated papers, such as plain paper and offset paper; and fabrics, such as cotton. Of these, the non-absorbable printing media are preferable, and plastic-based base materials are more preferable.

**Examples**

<Pigment>

CR-90-2 (product name, titanium oxide treated with silica, alumina, and an organic matter, an average particle size of 0.25 μm, DBP oil supply quantity of 20 mL/100 g, ISHIHARA SANGYO KAISHA, LTD.)

<Additive>

Surfynol 465 (Nissin Chemical Co, LTD.), acetylenediol-based surfactant

<Aqueous Resin Varnish>

Aqueous resin varnishes A to K, each having a solid content of 20%, were obtained by dissolving 20 parts by mass of styrene/stearyl acrylate/acrylic acid or styrene/lauryl acrylate/acrylic acid copolymer, which were alkali-soluble resins presented in Table 1, in a mixed solution of 2.5 parts by mass of potassium hydroxide and 77.5 parts by mass of water.

[Table 1]

|  | Composition | Glass transition temperature (°C) | Weight-average molecular weight | Acid value |
|---|---|---|---|---|
| Aqueous resin varnish A | Styrene/stearyl acrylate/ acrylic acid | 80 | 15000 | 150 |
| Aqueous resin varnish B | Styrene/lauryl acrylate/ acrylic acid | 80 | 15000 | 150 |
| Aqueous resin varnish C | Styrene/stearyl acrylate/ acrylic acid | 80 | 30000 | 150 |
| Aqueous resin varnish D | Styrene/stearyl acrylate/ acrylic acid | 80 | 15000 | 100 |
| Aqueous resin varnish E | Styrene/stearyl acrylate/ acrylic acid | 80 | 15000 | 200 |
| Aqueous resin varnish F | Styrene/stearyl acrvlate/ acrvlic acid | 60 | 15000 | 150 |
| Aqueous resin varnish G | Styrene/stearyl acrylate/ acrylic acid | 30 | 15000 | 150 |
| Aqueous resin varnish H | Styrene/stearyl acrylate/ acrylic acid | 10 | 15000 | 150 |
| Aqueous resin varnish I | Styrene/stearyl acrylate/ acrylic acid | 80 | 5000 | 150 |
| Aqueous resin varnish J | Styrene/stearyl acrylate/ acrylic acid | 80 | 15000 | 50 |

(continued)

|  | Composition | Glass transition temperature (°C) | Weight-average molecular weight | Acid value |
|---|---|---|---|---|
| Aqueous resin varnish K | Styrene/stearyl acrylate/ acrylic acid | 80 | 5000 | 50 |

<Preparation of Pigment-Dispersed Liquid>

Resin varnishes for pigment dispersion were prepared by adding and mixing 20.0 parts by mass of water to 40.0 parts by mass of each of the above-mentioned aqueous resin varnishes A to K. Pigment-dispersed liquids A to F, and I to M were obtained by also adding 40.0 parts by mass of CR-90-2 to each of these varnishes, followed by stirring and mixing, and kneading with a wet-type circulation mill. On this occasion, pigment-dispersed liquids A to F were made by respectively using the above-mentioned aqueous resin varnishes A to F, a pigment-dispersed liquid I was made using the above-mentioned aqueous resin varnish G, a pigment-dispersed liquid J was made using the above-mentioned aqueous resin varnish H, a pigment-dispersed liquid K was made using the above-mentioned aqueous resin varnish I, a pigment-dispersed liquid L was made using the above-mentioned aqueous resin varnish J, and a pigment-dispersed liquid M was made using the above-mentioned aqueous resin varnish K.

Also, a resin varnish for pigment dispersion was also prepared by adding 50.0 parts by mass of water to 10.0 parts by mass of the above-mentioned aqueous resin varnish A, followed by mixing together. A pigment-dispersed liquid G was obtained by adding 40.0 parts by mass of CR-90-2 to this varnish, followed by stirring and mixing, and kneading with a wet-type circulation mill.

Also, a resin varnish for pigment dispersion was also prepared by adding 30.0 parts by mass of water to 50.0 parts by mass of the above-mentioned aqueous resin varnish A, followed by mixing together. A pigment-dispersed liquid H was obtained by adding 20.0 parts by mass of CR-90-2 to this varnish, followed by stirring and mixing, and kneading with a wet-type circulation mill.

Also, a resin varnish for pigment dispersion was also prepared by adding 58.0 parts by mass of water to 2.0 parts by mass of the above-mentioned aqueous resin varnish A, followed by mixing together. A pigment-dispersed liquid O was obtained by adding 40.0 parts by mass of CR-90-2 to this varnish, followed by stirring and mixing, and kneading with a wet-type circulation mill.

Also, a resin varnish for pigment dispersion was also prepared by adding 10.0 parts by mass of water to 70.0 parts by mass of the above-mentioned aqueous resin varnish A, followed by mixing together. A pigment-dispersed liquid P was obtained by adding 20.0 parts by mass of CR-90-2 to this varnish, followed by stirring and mixing, and kneading with a wet-type circulation mill.

<Preparation of White Ink Composition>

White ink compositions were individually prepared by mixing so as to have contents presented in Table 2.

For example, Example 1 was a white ink composition obtained in the following manner. A mixture was obtained by mixing the pigment-dispersed liquid A and the aqueous resin varnish A so that a blending amount of a resin in the varnish relative to the pigment could be 20.0% by mass. Each of the white ink compositions was one in which 25 parts by mass of the mixture, a water-soluble solvent, a surfactant, and water were added until reaching 100 parts by mass.

<Preparation of Primer Composition>

A primer composition was obtained by stirring and mixing 2.0 parts by mass of calcium acetate, 0.5 parts by mass of Surfynol 465, and 97.5 parts by mass of water.

<Softness Evaluation and Redispersibility Evaluation of Sediment of White Ink Composition>

To evaluate the softness of the sediment, 800 mL of the white ink composition manufactured as described above was prepared and loaded in a 1L sample bottle, and was left to stand at room temperature for one month. After one month, the appearance of the ink composition was observed, and titanium oxide was sedimented at the bottom. The softness of the sediment was evaluated by scraping the bottom with a spatula. Also, to evaluate redispersibility, the ink composition was stirred under conditions at a rotational frequency of 400 rpm for 10 minutes using a Disper mixer, and a visual observation was made as to whether or not the sediment was redispersed.

[Evaluation Standards of Softness of Sediment]

O: The sediment is soft and not sticky, and there is no resistance when scraping with the spatula;
△: The sediment has medium hardness and is not sticky, and there is slight resistance when scraping with the spatula; and
×: The sediment is hard and sticky, there is a large resistance when scraping with the spatula, and the spatula sticks in the sediment.

[Evaluation Standards of Redispersibility]

O: Redispersed;
△: Mostly redispersed, but the sediment remains somewhat; and
×: There is no change in the sediment.

<Evaluation of Discharge Property of Ink Composition>

The white ink composition was loaded in a cartridge of a printer for evaluation with a head manufactured by Seiko Epson Corporation mounted thereon, and printing was carried out on masking paper to evaluate image quality of a printed matter.

[Evaluation Standards of Discharge Property]

O: One wherein stable discharge can be performed without distorted printing;
△: One wherein discharge can be performed even though printing is somewhat distorted; and
×: One wherein discharge cannot stably be performed and shows distorted printing

<Image Quality Evaluation>

Masking paper for evaluation was prepared by applying the primer composition to masking paper by a #4 wire bar manufactured by Marukyo Giken Co., Ltd. White ink compositions of Examples 1 to 10 and Comparative Examples 1 to 9 were individually printed in a thin line shape with a width of approximately 0.3 mm on the masking paper for evaluation by using a printer PX105 manufactured by Seiko Epson Corporation. Thickening of the thin line due to bleeding of the ink composition was visually observed to evaluate image quality of a printed part.

[Evaluation Standards of Image Quality]

O: One wherein no bleeding occurs, and the thin lines are straight lines and are printed at the original thickness;
△: One wherein the thin lines are straight lines and no line thickened by twice as much is observed, even though a partial thickening can be seen; and
×: One wherein the thin lines are not straight lines, or lines thickened by twice as much can be observed as a whole

<Storage Stability Evaluation of Ink Composition>

After the white ink composition was packed in a glass bottle and was left to stand at 60°C for four weeks, viscosity of an aqueous pigment-type inkjet ink composition was measured.

[Evaluation Standards of Storage Stability]

O: One wherein a rate of change from an initial viscosity is less than 10%;

△: One wherein a rate of change from an initial viscosity is 10% or more and less than 20%; and

×: One wherein a rate of change from an initial viscosity is 20% or more

[Table 2]

| Pigment-dispersed liquid names | Alkali-soluble resin content (% relative to pigment) | Examples | | | | | | | | | |
|---|---|---|---|---|---|---|---|---|---|---|---|
| | | 1 | 2 | 3 | 4 | 5 | 6 | 7 | 8 | 9 | 10 |
| Pigment-dispersed liquid A (Pig = 40%) | 20 | 25 | - | - | - | - | - | - | - | 125 | 37.5 |
| Pigment-dispersed liquid B (Pig = 40%) | 20 | - | 25 | - | - | - | - | - | - | - | - |
| Pigment-dispersed liquid C (Pig = 40%) | 20 | - | - | 25 | - | - | - | - | - | - | - |
| Pigment-dispersed liquid D (Pig = 40%) | 20 | - | - | - | 25 | - | - | - | - | - | - |
| Pigment-dispersed liquid E (Pig = 40%) | 20 | - | - | - | - | 25 | - | - | - | - | - |
| Pigment-dispersed liquid F (Pig = 40%) | 20 | - | - | - | - | - | 25 | - | - | - | - |
| Pigment-dispersed liquid G (Pig = 40%) | 5 | - | - | - | - | - | - | 25 | - | - | - |
| Pigment-dispersed liquid H (Pig = 20%) | 50 | - | - | - | - | - | - | - | 50 | - | - |
| Pigment-dispersed liquid I (Pig = 40%) | 20 | - | - | - | - | - | - | - | - | - | - |
| Pigment-dispersed liquid J (Pig = 40%) | 20 | - | - | - | - | - | - | - | - | - | - |
| Pigment-dispersed liquid K (Pig = 40%) | 20 | - | - | - | - | - | - | - | - | - | - |
| Pigment-dispersed liquid L (Pig = 40%) | 20 | - | - | - | - | - | - | - | - | - | - |
| Pigment-dispersed liquid M (Pig = 40%) | 20 | - | - | - | - | - | - | - | - | - | - |
| Pigment-dispersed liquid O (Pig = 40%) | 1 | - | - | - | - | - | - | - | - | - | - |
| Pigment-dispersed liquid P (Pig = 20%) | 70 | - | - | - | - | - | - | - | - | - | - |
| Water-soluble solvent | Propylene glycol | 30 | 30 | 30 | 30 | 30 | 30 | 30 | 30 | 30 | 30 |
| Surfactant | Surfynol 465 | 1 | 1 | 1 | 1 | 1 | 1 | 1 | 1 | 1 | 1 |
| Water | | 44 | 44 | 44 | 44 | 44 | 44 | 44 | 19 | 56.5 | 31.5 |
| Total | | 100 | | | | | | | | | |
| Alkali-soluble resin content | | 2 | 2 | 2 | 2 | 2 | 2 | 0.5 | 5 | 1 | 3 |

(continued)

| | | Examples | | | | | | | | | |
|---|---|---|---|---|---|---|---|---|---|---|---|
| Pigment-dispersed liquid names | Alkali-soluble resin content (% relative to pigment) | 1 | 2 | 3 | 4 | 5 | 6 | 7 | 8 | 9 | 10 |
| Evaluation items | Sediment softness | ○ | ○ | ○ | ○ | ○ | Δ | Δ | Δ | ○ | Δ |
| | Redispersibility | ○ | ○ | ○ | ○ | ○ | Δ | Δ | Δ | ○ | Δ |
| | Discharge property | ○ | ○ | ○ | ○ | ○ | ○ | Δ | Δ | ○ | Δ |
| | Image quality | ○ | ○ | ○ | ○ | ○ | ○ | Δ | Δ | ○ | ○ |
| | Storage Stability | ○ | ○ | ○ | ○ | ○ | ○ | Δ | Δ | ○ | ○ |
| | | Comparative Examples | | | | | | | | | |
| Pigment-dispersed liquid names | Alkali-soluble resin content (% relative to pigment) | 1 | 2 | 3 | 4 | 5 | 6 | 7 | 8 | 9 | |
| Pigment-dispersed liquid A (Pig = 40%) | 20 | - | - | - | - | - | - | - | 2.5 | 75 | |
| Pigment-dispersed liquid B (Pig = 40%) | 20 | - | - | - | - | - | - | - | - | - | |
| Pigment-dispersed liquid C (Pig = 40%) | 20 | - | - | - | - | - | - | - | - | - | |
| Pigment-dispersed liquid D (Pig = 40%) | 20 | - | - | - | - | - | - | - | - | - | |
| Pigment-dispersed liquid E (Pig = 40%) | 20 | - | - | - | - | - | - | - | - | - | |
| Pigment-dispersed liquid F (Pig = 40%) | 20 | - | - | - | - | - | - | - | - | - | |
| Pigment-dispersed liquid G (Pig = 40%) | 5 | | | | | | | | | | |
| Pigment-dispersed liquid H (Pig = 20%) | 50 | - | - | - | - | - | - | - | - | - | |
| Pigment-dispersed liquid I (Pig = 40%) | 20 | 25 | - | - | - | - | - | - | - | - | |
| Pigment-dispersed liquid J (Pig = 40%) | 20 | - | 25 | - | - | - | - | - | - | - | |
| Pigment-dispersed liquid K (Pig = 40%) | 20 | - | - | 25 | - | - | - | - | - | - | |
| Pigment-dispersed liquid L (Pig = 40%) | 20 | - | - | - | 25 | - | - | - | - | - | |
| Pigment-dispersed liquid M (Pig = 40%) | 20 | - | - | - | - | 25 | - | - | - | - | |
| Pigment-dispersed liquid O (Pig = 40%) | 1 | - | - | - | - | - | 25 | - | - | - | |

(continued)

| Pigment-dispersed liquid names | Alkali-soluble resin content (% relative to pigment) | Comparative Examples | | | | | | | | |
|---|---|---|---|---|---|---|---|---|---|---|
| | | 1 | 2 | 3 | 4 | 5 | 6 | 7 | 8 | 9 |
| Pigment-dispersed liquid P (Pig = 20%) | 70 | - | - | - | - | - | - | 50 | - | - |
| Water-soluble solvent | Propylene glycol | 30 | 30 | 30 | 30 | 30 | 30 | 30 | 50 | 15 |
| Surfactant | Surfynol 465 | 1 | 1 | 1 | 1 | 1 | 1 | 1 | 1 | 1 |
| Water | | 44 | 44 | 44 | 44 | 44 | 44 | 19 | 46.5 | 9 |
| Total | | 100 | | | | | | | | |
| Alkali-soluble resin content | | 2 | 2 | 2 | 2 | 2 | 0.1 | 7 | 0.2 | 6 |
| Evaluation items | Sediment softness | Δ | Δ | Δ | ○ | ○ | Δ | Δ | ○ | Δ |
| | Redispersibility | × | × | Δ | Δ | Δ | Δ | Δ | ○ | Δ |
| | Discharge property | ○ | ○ | ○ | ○ | ○ | Δ | × | ○ | × |
| | Image quality | ○ | ○ | ○ | × | × | × | × | × | × |
| | Storage Stability | ○ | ○ | × | ○ | × | × | × | ○ | × |

According to Examples 1 to 10 that are embodiments of the present invention, the sediments of the ink compositions were soft, and these were excellent in redispersibility and discharge property, and were also excellent in image quality after printing, and storage stability.

However, in Comparative Examples 1 and 2 each having a low glass transition temperature of the water-dispersible resin, particularly redispersibility was poor. Comparative Example 3 having a low weight-average molecular weight of the water-dispersible resin was particularly poor in storage stability. Comparative Example 4, having a low acid value of the water-dispersible resin, was particularly poor in image quality. Comparative Example 5, having a low weight-average molecular weight and a low acid value of the water-dispersible resin, was particularly poor in image quality and storage stability. Comparative Example 6, having a low content of the water-dispersible resin in the ink composition, was particularly poor in image quality and storage stability. Comparative Example 7, having an excessively high content of water-dispersible resin in the ink composition, was particularly poor in discharge property, image quality, and storage stability. Comparative Example 8, having a low concentration of pigment, was particularly poor in image quality. In contrast, Comparative Example 9, having a high concentration of pigment, was particularly poor in discharge property, image quality, and storage stability.

## Claims

1.　A white ink composition comprising:

5.0 to 20.0% by mass of a titanium oxide pigment in the ink composition;
3.0 to 60.0 parts by mass of a solid content of an alkali-soluble resin relative to 100 parts by mass of a pigment or pigments in the ink composition, wherein building blocks of the alkali-soluble resin are styrene; stearyl acrylate and/or lauryl acrylate; and acrylic acid, and the alkali-soluble resin has a weight-average molecular weight of 10,000 or more, an acid value of 100 mgKOH/g or more, and a glass transition temperature of 50°C or more; and
a surfactant.

2.　The white ink composition according to claim 1, wherein the solid content of the alkali-soluble resin is 10.0 to 30.0 parts by mass relative to 100 parts by mass of the pigment(s) in the ink composition.

## INTERNATIONAL SEARCH REPORT

| | International application No. |
|---|---|
| | **PCT/JP2021/042443** |

**A. CLASSIFICATION OF SUBJECT MATTER**

*B41J 2/21*(2006.01)i; *C09D 11/326*(2014.01)i; *B41M 5/00*(2006.01)i
FI: C09D11/326; B41J2/21; B41M5/00 120

According to International Patent Classification (IPC) or to both national classification and IPC

**B. FIELDS SEARCHED**

Minimum documentation searched (classification system followed by classification symbols)

B41J2/21; C09D11/326; B41M5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-55943 A (SAKATA INKS) 09 April 2020 (2020-04-09)<br>claim 1, paragraphs [0016]-[0022], [0034], [0039], example 7 | 1, 2 |
| A | JP 2020-146912 A (TOYO INK SC HOLDINGS CO LTD) 17 September 2020 (2020-09-17)<br>claims 1, 7, paragraphs [0051]-[0055], [0065]-[0074], [0082]-[0086] | 1, 2 |
| A | JP 2017-75302 A (KAO CORP) 20 April 2017 (2017-04-20)<br>claims 1, 3, 5, 7, example 8 | 1, 2 |
| A | JP 2014-43492 A (TOYO INK SC HOLDINGS CO LTD) 13 March 2014 (2014-03-13)<br>claims 1, 4, paragraphs [0015]-[0034], [0040], examples 12, 13 | 1, 2 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 January 2022** | **01 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/042443**

| Patent document cited in search report | | | Publication date (day/month/year) | Patent family member(s) | | | Publication date (day/month/year) |
|---|---|---|---|---|---|---|---|
| JP | 2020-55943 | A | 09 April 2020 | WO | 2020/071055 | A1 | |
| | | | | CN | 112752807 | A | |
| | | | | JP | 6640951 | B1 | |
| JP | 2020-146912 | A | 17 September 2020 | (Family: none) | | | |
| JP | 2017-75302 | A | 20 April 2017 | US | 2018/0311968 | A1 | |
| | | | | claims 1, 3, 5, 13, example 8 | | | |
| | | | | WO | 2017/061340 | A1 | |
| | | | | EP | 3360682 | A | |
| | | | | CN | 108136770 | A | |
| JP | 2014-43492 | A | 13 March 2014 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021004368 A
- JP 2022084072 A
- JP 2000094825 A
- WO 2005116147 A

- JP 2009190379 A
- JP 6424266 B
- JP 2017088646 A

**Non-patent literature cited in the description**

- **P.A. LOVELL ; M.S. EL-AASSER.** Emulsion Polymerization and Emulsion Polymer. John Wiley & Sons Ltd, 1977